(19) Europäisches Patentamt
European Patent Office
Office européen des brevets

(11) Publication number: 0 048 621
A2

(12) EUROPEAN PATENT APPLICATION

(21) Application number: 81304333.8

(22) Date of filing: 21.09.81

(51) Int. Cl.³: H 01 M 4/36
H 01 M 6/16

(30) Priority: 24.09.80 US 190195

(43) Date of publication of application:
31.03.82 Bulletin 82/13

(84) Designated Contracting States:
DE FR GB

(71) Applicant: Ray-O-Vac Corporation
101 East Washington Avenue
Madison WI 53703(US)

(72) Inventor: Joshi, Ashok Venimadhav
117 Shankar Niwas Shivaji Park Road, No. 3
Bombay 28(IN)

(74) Representative: Hedley, Nicholas James Matthew
Thames House (fifth floor) Millbank
London SWIP 4QF(GB)

(54) A process for preparing cathode mass for non-aqueous electrochemical cells, a cathode mass for use in such cells and cells incorporating the cathode mass.

(57) There is described a process of making cathode mass for a non-aqueous electrochemical cell having an active metal anode. The process involves reducing a non-stoichiometric cathode active material, e.g. iron sulphide, with an active metal, e.g. Li, or a precursor of an active metal, e.g. $Li_3N$, to produce a cathode mass comprising stoichiometric active material, a compound of the active metal with the element of the non-stoichiometric active material in excess, and at most 40 mole percent, based on the non-stoichiometric starting material, of a chemical species resulting from the reduction of the active cathode material. The cathode mass gives rise to stable voltages when connected to an external circuit.

EP 0 048 621 A2

# A Process for Preparing Cathode Mass for Non-Aqueous Electrochemical Cells. A Cathode Mass for such Cells and Cells Incorporating the Cathode Mass



The present invention relates to cathode mass for use in non-aqueous electrochemical cells having active metal anodes.

It is known to use non-stoichiometric compounds such as manganese dioxide and ferrous sulphide as cathodes in non-aqueous electrochemical cells having active metals, particularly lithium, as anodes. Quite often, however, such cells exhibit anomalously high open circuit voltages and high initial discharge voltage plateaus as compared to equilibrium open circuit voltages. This behaviour is particularly disadvantageous when the cell is to be connected to a voltage-sensitive circuit. Accordingly it is desirable to provide a cathode material utilizing the non-stoichiometric compounds that produces a more stable voltage.

It has now been discovered that cathodes made with a non-stoichiometric starting compound can be stabilized by means of a partial reduction using as the reductant the active metal employed in the cell in which the cathodes will be used.

The present invention provides a process for preparing a cathode mass for use in a non-aqueous electrochemical cell having an active metal anode, which process comprises reducing, in-situ, a non-stoichiometric active cathode material having at least two elemental components by means of an active metal or a conductive precursor of an active metal to produce, in-situ, a compound of the active metal with the elemental component of the non-stoichiometric active cathode material in excess, stoichiometric cathode active material, and at most 40 mole percent, based on the non-stoichiometric starting material, of a reduced chemical species resulting from the reduction of the active cathode material.

The invention also contemplates a cathode or cathode mass comprising at least 50 mole percent of a stoichiometric active cathode material in intimate contact with an in-situ-formed compound of an active metal and a chemical species resulting from chemical reduction of the cathode active material.

Cathode materials that are usually non-stoichiometric and which can be used in the process of the present invention include manganese dioxide, iron sulphide, tungsten oxide, titanium disulphide and chromium trioxide. To the extent that in this description these starting materials are referred to by stoichiometric formulae, e.g. $MnO_2$, FeS and the like, this is merely for the sake of convenience and does not indicate anything contrary to the scope of this general description.

Active metals useful in non-aqueous electrochemical cells include, in general, the alkali metals and the alkaline earth metals. Advantageously the active metal employed is lithium. As is well known to those skilled in the art, the use of lithium provides to a non-aqueous electrochemical cell high energy density as well as reasonably good electrolytic conductivity through use of solutions or layers of lithium salts as electrolytes. For these reasons, lithium is used in this specification for descriptive purposes although it will be appreciated that other active metals may be used instead. As used herein, the term "precursor of an active metal" means any compound, mixture or alloy of an active metal, e.g. lithium, which will act as a reductant in the same manner as the active metal. In the case of lithium, precursors such as $Li_3N$, $Li_3Bi$, aluminum-lithium alloy, $Li_5Si$ and $Li-Al_2O_3$ mixtures are advantageous in that they reduce non-stoichiometric active cathode materials in the same manner as the pure metal and are more readily obtained in fine powder form for blending with powdered cathode

active material than is the pure metal. The use of the precursor $Li_3N$ is deemed particularly advantageous in that, during reduction, nitrogen gas is released which inhibits the reoxidation of the reduced chemical species during reduction and allied processing. Furthermore, any $Li_3N$ not employed in reduction functions as a highly efficient ionic conductor raising the rate capability of the cathode.

Under ordinary circumstances, the reduction process of the present invention involving reduction to the reduced chemical species of up to 40% of the originally available non-stoichiometric active cathode material is carried out in the solid or quasi-solid state. Appropriate amounts of non-stoichiometric material and reductant are blended and ground together as powders along with conductivity enhancers (e.g. carbon), if necessary. The blended powders are then compacted and subjected to a temperature at which the reduction will take place and below that temperature at which either melting or decomposition of the non-stoichiometric material takes place. The compacted powders are held at reduction temperature for a period of time sufficient for completion of reaction. Upon cooling, the mass which contains stoichiometric active cathode material, a reduced chemical species thereof, an active metal compound and, optionally, conductivity enhancer, is formed into a cathode by conventional means, for example by regrinding and compaction under pressure. The compound of the active metal with at least one elemental component of the non-stoichiometric active cathode material, e.g. $Li_2O$, $Li_2S$, $LiMnO_2$, remains in intimate contact with the stoichiometric active cathode material in the reground and compacted final cathode mass.

In order to retain as much as practical of the capacity of the original starting non-stoichiometric

cathode material, it is advanteous in the process of the present invention to limit the amount of the reductant to amounts which will reduce only about 5 to 20% of the non-stoichiometric material to the reduced chemical species and carry reduction heating to as near completion as possible. Alternatively one can use larger amounts of reductant and limit the degree of reduction reaction attained during the reducing process. Whatever way one chooses to carry out the process, the final product should contain, on a mole basis, a predominant amount of stoichiometric active cathode material. Advantageously the mole ratio of stoichiometric active cathode material to reduced specie should be at least 3/2 and, even more advantageously, at least 4/1.

The present invention will now be described in greater detail in the following Examples:

EXAMPLE 1

Ten parts by weight of non-stoichiometric FeS and 0.75 part by weight of $Li_3N$ were mixed and ground together in a dry, inert atmosphere. The ground mixture was then heated under dry, inert conditions at 450°C for one hour. After cooling, the resultant solid block of cathode mass was broken down to powder form and pressed into pellets under an applied pressure of about 73 $kg/mm^2$. Similar pellets were produced using ten parts by weight of non-stoichiometric FeS and 0.9 parts by weight of $Li_3N$. Comparative cathode pellets were made by compressing the non-stoichiometric FeS.

These pellets were introduced as cathodes into electrochemical cells all of similar construction having lithium metal anodes, glass mat separators and electrolytes comprising a 1.2 molar solution of $LiAsF_6$ dissolved in a mixture of 40% propylene carbonate and 60% dimethoxyethane. The initial open circuit voltages (OCV) and OCV after periods of time are set forth in the following Table.

TABLE

| Sample No. | Type of Cathode | Initial OCV | Time Period (Hrs) | OCV after time period |
|---|---|---|---|---|
| 1 | FeS + 7.5% $Li_3N$ (Reacted) | 1.772 | 75.5 | 1.798 |
| 2 | " | 1.778 | " | 1.826 |
| 3 | " | 1.779 | " | 1.823 |
| 4 | " | 1.784 | " | 1.830 |
| 5 | " | 1.773 | " | 1.819 |
| 6 | " | 1.775 | " | 1.820 |
| 7 | FeS + 9% $Li_3N$ (Reacted) | 1.874 | 92 | 1.875 |
| 8 | " | 1.871 | " | 1.873 |
| 9 | " | 1.876 | " | 1.875 |
| 10 | " | 1.869 | " | 1.869 |
| 11 | " | 1.868 | " | 1.868 |
| 12 | " | 1.865 | " | 1.864 |
| 13 | " | 1.882 | " | 1.879 |
| A | FeS | 2.984 | 116.5 | 2.911 |
| B | " | 2.920 | " | 2.755 |
| C | " | 2.994 | " | 2.846 |
| D | " | 2.922 | " | 2.918 |
| E | " | 2.993 | " | 2.631 |
| F | " | 3.008 | " | 2.936 |
| G | " | 3.008 | " | 2.943 |
| H | " | 2.986 | " | 2.969 |

The data in the Table shows that cathodes of Samples 1 to 13 in accordance with the invention are more stable than the cathodes of comparative tests A to H not in accordance with the invention.

EXAMPLE 2

A manganese dioxide cathode mass in accordance with the present invention is made by reacting together non-stoichiometric manganese dioxide and lithium nitride

The $Li_3N$ reacts most rapidly with the excess oxygen in the non-stoichiometric manganese dioxide to produce the stoichiometric compound. The $Li_3N$ in excess of that required to eliminate non-stoichiometry, reacts to produce the reduced chemical species by a reaction expressable in the following form:

$$2Li_3N + 2MnO_{2+x} \longrightarrow 2x(Li_2O) + 2(3-2x)LiMnO_2 + 4(x-1)MnO_2 + N_2$$

wherein x is the molar excess of oxygen beyond the stoichiometric amount required for $MnO_2$. The resultant cathode mass contains, in addition to stoichiometric $MnO_2$, the reduced chemical species $LiMnO_2$, lithium oxide, and an amount of carbon such as usually employed to enhance the conductivity of manganese dioxide masses.

1. A process for preparing a stable cathode mass for use in a non-aqueous electrochemical cell having an active metal anode, which process comprises reducing, in-situ, a non-stoichiometric active cathode material having at least two elemental components by means of an active metal or a conductive precursor of an active metal to produce, in-situ, a compound of the active metal with the elemental component of the non-stoichiometric active cathode material in excess, stoichiometric cathode active material and, at most 40 mole percent, based on the non-stoichiometric starting material, of a chemical species resulting from the reduction of the active cathode material.

2. A process as claimed in claim 1, wherein the non-stoichiometric cathode active material is $MnO_2$, FeS, $WO_3$, TiS or $CrO_3$.

3. A process as claimed in claim 1 or claim 2, wherein the active metal is lithium.

4. A process as claimed in any one of claims 1 to 3, wherein the active metal percursor is $Li_3N$.

5. A process as claimed in any one of claims 1 to 4, wherein the amount of active metal or active metal percursor is sufficient to produce from 5 to 20 mole percent, based on the non-stoichiometric starting material, of the chemically reduced species.

6. A cathode mass for use in a non-aqueous electrochemical cell having an active metal anode, which cathode mass comprises at least 50 mole percent of a stoichiometric cathode active material in intimate contact with an in-situ produced compound of an active metal and chemical species resulting from chemical reduction of cathode active material.

7. A cathode mass as claimed in claim 6, wherein the cathode active material is $MnO_2$, FeS, $WO_3$, $TiS_2$ or $CrO_3$.

8. A cathode mass as claimed in claim 6 or 7, wherein the compound of an active metal is a lithium compound.

9. A non-aqueous electrochemical cell comprising an active metal anode, a non-aqueous electrolyte and a cathode mass as claimed in any one of claims 6 to 8.